# EUROPEAN PATENT SPECIFICATION

(11) **EP 4 545 475 B1**
(45) Date of publication and mention of the grant of the patent: **30.09.2026**
(21) Application number: 23856095.7
(22) Date of filing: 20.04.2023
(51) Int. Cl.: B66F 13/00, F16B 7/10, B66C 23/687, E02F 3/30

(54) **INSULATED TELESCOPIC ARM AND INSULATED BUCKET ARM VEHICLE**
ISOLIERTER TELESKOPISCHER ARM UND FAHRZEUG MIT ISOLIERTEM SCHAUFELARM
BRAS TÉLESCOPIQUE ISOLÉ ET VÉHICULE À BRAS DE NACELLE ISOLÉ

(30) Priority: 25.08.2022 CN 202211028096
(43) Date of publication of application: 30.04.2025
(73) Proprietor: Zoomlion Heavy Industry Science and Technology Co., Ltd., Changsha, Hunan 410013 (CN)
(72) Inventor: LIU, Yanbin, Changsha, Hunan 410013 (CN); JIANG, Kaige, Changsha, Hunan 410013 (CN); NING, Jiapei, Changsha, Hunan 410013 (CN); FU, Ling, Changsha, Hunan 410013 (CN); ZHU, Xiaowei, Changsha, Hunan 410013 (CN); REN, Huili, Changsha, Hunan 410013 (CN); ZHONG, Yi, Changsha, Hunan 410013 (CN)
(74) Representative: Petraz, Gilberto Luigi
(86) International application number: PCT/CN2023/089457
(87) International publication number: WO 2024/041000

(56) References cited:
- EP-A1- 3 872 022
- CN-A- 103 174 715
- CN-A- 103 508 336
- CN-A- 104 847 759
- CN-A- 106 829 760
- CN-U- 202 429 970
- CN-U- 203 603 970
- CN-U- 206 328 118
- GB-A- 2 125 004

## Description

### Cross Reference to Related Applications

The present application claims for the benefits of the Chinese Patent Application No. 202211028096.3 filed on Aug. 25, 2022.

### FIELD

The present disclosure belongs to the technical field of engineering machinery, and particularly relates to an insulated telescopic arm and an insulated bucket arm vehicle.

### BACKGROUND

Insulated bucket arm vehicles are aerial live working apparatuses, which have characteristics of convenient lifting, high mobility, high stability, and high insulating property, and are favored in the power industry.

The insulated telescopic arms of existing insulated bucket arm vehicles are usually of a slider type, which is to say, a nylon slider is mounted on the inner lower surface of an outer arm, the outer lower surface of the inner arm made of glass fiber reinforced plastics (FRP) contacts with the nylon slider in the extension and retraction process of the FRP inner arm, thereby a sliding movement is produced, so as to avoid direct contact between the FRP inner arm and the iron outer arm. However, nylon tends to be aged and is not wear-resistant; and the sliding friction resistance will increase as long as the surface is slightly damaged, indirectly resulting in increased pressure of the hydraulic system; consequently, the telescopic arm is forced to extend, and the friction between the FRP inner arm and the nylon slider causes scratches on the insulating coating on the FRP outer surface, which lead to degraded insulation of the FRP inner arm and potential safety hazards. Moreover, since the system pressure is high, the hydraulic oil temperature will rise rapidly, the service life of the hydraulic oil will be shortened, and impacts on the sealing elements in the hydraulic system will occur, increasing the probability of damage of the sealing elements and increasing the possibility of oil leakage.

A rolling roller device for insulated arms is disclosed in Chinese Utility Model No. 201120564104.7. The rolling roller device includes a basic arm and an insulated telescopic arm limited inside the basic arm, and a rolling shaft is arranged below the insulated telescopic arm. The rolling roller device can be used in replacement of an existing slider, so as to produce rolling friction between the arms, thereby decrease the pressure of the hydraulic system and reduce the wear on the insulated arm. However, after the slider is replaced by the rolling roller device, the contact area between the insulated telescopic arm and the rolling roller device is significantly smaller than the contact area between the insulated telescopic arm and the slider. However, owing to the self-weight of the insulated telescopic arm and the high rated load on the insulated telescopic arm, the specific pressure at the position of contact between the insulated telescopic arm and the rolling roller device is excessively high. Although the rolling friction leads to reduced wear, the increased specific pressure will cause increased wear.

China Utility Model No. 201621407892.8 provides a roller mechanism for the telescopic arm of a hybrid-arm insulated aerial device, in which two rollers are mounted in parallel to form an integral roller assembly, and, when the FRP inner arm extends and is bent to a certain degree, the roller mechanism will adjust automatically according to the bending condition of the FRP inner arm, so that the inner arm is in full contact with the roller mechanism to ensure the rolling effect. However, this scheme only allows the two rollers to share the pressure, but can't ensure that the two rollers bear the pressure evenly; as a result, the FRP inner arm may be worn easily, and the service life and insulated performance of the FRP inner arm are affected adversely.

GB-A-2125004 discloses an insulated telescopic arm as of the preamble of independent claim 1.

### SUMMARY

In view of the above shortcomings or drawbacks, the present invention, which is identified in the attached set of claims, provides an insulated telescopic arm and an insulated bucket arm vehicle, so as to solve the technical problem that two rollers used in parallel to form an integral roller assembly can share the pressure of the insulated inner arm but may not bear the pressure evenly.

To attain the above object, the present invention provides an insulated telescopic arm pursuant to claim 1, which includes:
an outer arm, an insulated inner arm and a self-adjusting roller apparatus, the insulated inner arm is confined in the outer arm and can move and extend from a free end of the outer arm in an axial direction; the self-adjusting roller apparatus includes a pressure cylinder arranged on the outer arm, piston rods that can move up and down in the pressure cylinder, and roller assemblies for bearing the insulated inner arm, at least two roller assemblies are provided, and each roller assembly includes a roller shaft and a roller body that is used for bearing the insulated inner arm and is rotatably sleeved outside the roller shaft, and two ends of the roller shaft extending out of the roller body are correspondingly connected to the piston rods. The two ends of each of the at least two roller assemblies are connected with a piston rod which moves up and down in the pressure cylinder.

In an embodiment, the pressure cylinder includes a cylinder body with a communication space formed therein and a piston lifting portion with a lifting channel formed therein, the cylinder body is provided with piston lifting portions respectively arranged at positions corresponding to the two ends of the roller assembly, and the communication space of the cylinder body is in communication with the lifting channels of the piston lifting portions; and the piston rod includes a piston body arranged in the lifting channel and a rod body connecting the piston body and the roller shaft.

In an embodiment, each piston rod is provided with a movement hole, and the self-adjusting roller apparatus further includes retaining nuts; two ends of the roller shaft extending out of the roller body pass through corresponding movement holes and retaining nuts, and are connected to the retaining nuts through threads.

In an embodiment, the movement hole is formed with a movement clearance for the roller shaft to move up and down.

In an embodiment, the roller shaft has a circular cross section, and the movement hole is a square hole.

In an embodiment, a bearing element is arranged between the roller shaft and the roller body.

In an embodiment, a lower side plate of the outer arm bulges downward to form a mounting space for accommodating the pressure cylinder.

In an embodiment, the insulated telescopic arm further includes a first stop block, which is arranged on the inner wall of the outer arm and used for abutting against the upper side and the left and right sides of the insulated inner arm.

In an embodiment, the insulated telescopic arm further includes a second stop block, which is arranged on the outer peripheral wall of the inner end of the insulated inner arm and used for abutting against the inner wall of the outer arm.

In an embodiment, a plurality of roller assemblies are provided, each roller assembly is arranged in the width direction of the outer arm, and the plurality of roller assemblies are arranged at an interval sequentially in the length direction of the outer arm.

To attain the above object, the present invention further provides an insulated bucket arm vehicle, which includes the insulated telescopic arm described above.

With the above technical scheme, the insulated telescopic arm provided in the embodiments of the present disclosure achieves the following beneficial effects:
When the above insulated telescopic arm is used, since the self-adjusting roller apparatus includes a pressure cylinder arranged on the outer arm, piston rods that can move up and down in the pressure cylinder and roller assemblies for bearing the insulated inner arm, and at least two roller assemblies are provided, at least two roller assemblies can respectively support the insulated inner arm in a rolling state during a telescopic operation of the insulated inner arm, and each roller assembly includes a roller shaft and a roller body that is used for bearing the insulated inner arm and rotatably sleeved outside the roller shaft; two ends of the roller shaft extending out of the roller body are correspondingly connected with the piston rods, i.e., each roller assembly is correspondingly connected with two piston rods to support the two ends of the roller assembly respectively; thus, when the insulated inner arm extends out of the free end of the outer arm and is bent to a certain degree, the piston rods at the two ends of the at least two roller assemblies can move up and down in the pressure cylinder according to the bending condition of the insulated inner arm, so as to realize automatic adjustment, allow at least two roller assemblies to be in full contact with the insulated inner arm, and ensure a rolling effect; in addition, owing to the fact that the fluid medium in the pressure cylinder exerts the same pressure on each piston, at least two roller assemblies bear the pressure evenly, thereby the wear is greatly reduced, and the service life and insulated performance of the insulated inner arm are improved. Besides, the insulated telescopic arm provided by the present disclosure can also solve the technical problem of uneven pressure on the left and right ends of the roller assemblies.

Other features and advantages of the present disclosure will be further detailed below in some embodiments.

### BRIEF DESCRIPTION OF THE DRAWINGS

The accompanying drawings are provided herein to facilitate understanding on the present disclosure and constitute a part of this specification. They are used in conjunction with the following embodiments to explain the present disclosure, but are not intended to constitute any limitation on the present disclosure. In the figures:
Fig. 1 is a schematic structural diagram of the insulated telescopic arm according to an embodiment of the present disclosure;
Fig. 2 is a schematic structural diagram of the self-adjusting roller apparatus according to an embodiment of the present disclosure from a viewing angle;
Fig. 3 is a schematic structural diagram of the self-adjusting roller apparatus according to an embodiment of the present disclosure from another viewing angle;
Fig. 4 is a schematic structural diagram of the pressure cylinder according to an embodiment of the present disclosure;
Fig. 5 is a schematic structural diagram of the roller assembly and the piston rod according to one embodiment of the present disclosure from a viewing angle;
Fig. 6 is a schematic structural diagram of the roller assembly and the piston rod according to one embodiment of the present disclosure from another viewing angle;
Fig. 7 is a schematic structural diagram of the insulated inner arm and the self-adjusting roller apparatus according to an embodiment of the present disclosure;
Fig. 8 is a schematic sectional view of the insulated telescopic arm according to an embodiment of the present disclosure; and
Fig. 9 is a schematic structural diagram of the insulated telescopic arm according to another embodiment of the present disclosure.

### DETAILED DESCRIPTION

Some embodiments of the present disclosure will be detailed below with reference to the accompanying drawings. It may be understood that the embodiments described herein are only provided to describe and explain the present disclosure, but are not intended to constitute any limitation on the present disclosure.

The insulated telescopic arm in the present disclosure will be described below with reference to the accompanying drawings.

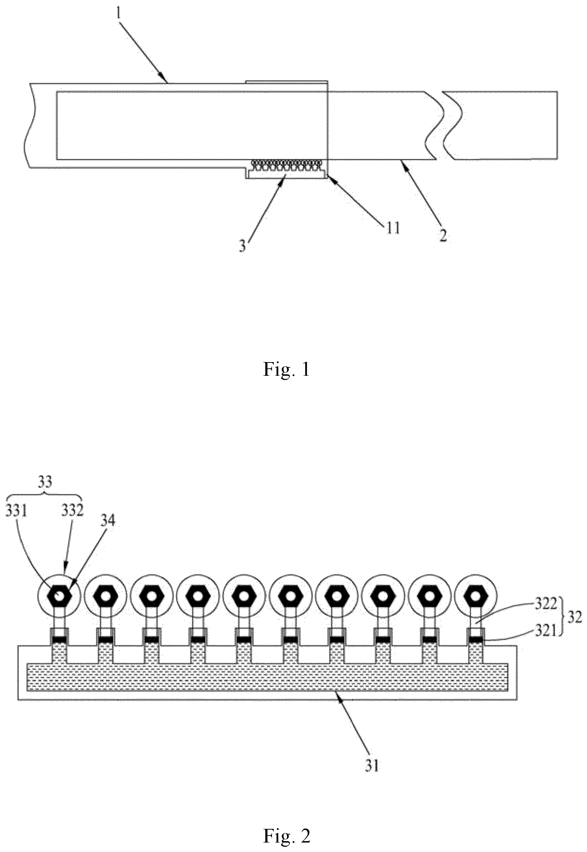

As shown in Figs. 1 and 2, the present disclosure provides an insulated telescopic arm, which includes:
an outer arm 1;
an insulated inner arm 2, which is confined in the outer arm 1 and can move and extend from a free end of the outer arm 1 in an axial direction;
a self-adjusting roller apparatus 3, which includes a pressure cylinder 31 arranged on the outer arm 1, piston rods 32 that can move up and down in the pressure cylinder 31, and roller assemblies 33 for bearing the insulated inner arm 2, at least two roller assemblies 33 are provided, and each roller assembly 33 includes a roller shaft 331 and a roller body 332 that is used for bearing the insulated inner arm 2 and is rotatably sleeved outside the roller shaft 331, and two ends of the roller shaft 331 extending out of the roller body 332 are correspondingly connected to the piston rods 32.

When the insulated telescopic arm is used, since the self-adjusting roller apparatus 3 includes a pressure cylinder 31 arranged on the outer arm 1, piston rods 32 that can move up and down in the pressure cylinder 31 and roller assemblies 33 for bearing the insulated inner arm 2, and at least two roller assemblies 33 are provided, at least two roller assemblies 33 can support the insulated inner arm 2 respectively during the telescopic operation of the insulated inner arm 2; in addition, the roller assembly 33 includes a roller shaft 331 and a roller body 332 that is used for bearing the insulated inner arm 2 and is rotatably sleeved outside the roller shaft 331, and two ends of the roller shaft 331 extending out of the roller body 332 are correspondingly connected to the piston rods 32, i.e., each roller assembly 33 is correspondingly connected to two piston rods 32 to support the two ends of the roller assembly 33 respectively. Thus, when the insulated inner arm 2 extends from the free end of the outer arm 1 and is bent to a certain degree, the piston rods 32 at the two ends of at least two roller assemblies 33 can move up and down in the pressure cylinder 31 according to the bending condition of the insulated inner arm 2, so as to realize automatic adjustment, and the at least two roller assemblies 33 are in full contact with the insulated inner arm 2 to ensure a rolling effect; in addition, owing to the fact that the fluid medium in the pressure cylinder 31 exerts equal pressure on each piston rod 32, the at least two roller assemblies 33 bear the pressure evenly, thereby the wear rate is greatly reduced, and the service life and insulated performance of the insulated inner arm 2 are improved. Besides, the insulated telescopic arm provided by the present disclosure can also solve the technical problem of uneven pressure on the left and right ends of the roller assemblies 33.

Particularly, it may be noted that the number of the roller assemblies 33 may be n (n is greater than or equal to 2); in that case, when the piston rods 32 at the two ends of each roller assembly 33 are placed in the pressure cylinder 31, a hydraulic system with 2n piston rods 32 can be formed. According to Pascal's law in engineering hydromechanics, after the specific pressure at any point in an incompressible static fluid is increased as a result of an external force, the increased specific pressure is instantaneously transferred to all points in the static fluid. That is to say, when certain specific pressure is applied on one piston rod 32 in a hydraulic system, the same increased specific pressure will be generated on the other piston rods 32. Specifically, the law can be expressed by a formula P₁ = P₂ = ... = P₂ₙ, i.e., F₁/S₁ = F₂/S₂ = ... = F₂ₙ/S₂ₙ. Owing to the fact that the action areas of the 2n piston rods 32 are the same, the force applied on each piston rod 32 is the same; thus, the at least two roller assemblies 33 bear the pressure evenly, and the left and right ends of each roller assembly 33 bear the pressure evenly.

In addition, the outer arm 1 in the present disclosure may be a metal outer arm or an insulated outer arm, which may be selected according to the actual situation. The pressure cylinder 31 in the present disclosure may be a hydraulic cylinder or a pneumatic cylinder; in the case of a hydraulic cylinder, the fluid medium in the hydraulic cylinder may include but is not limited to hydraulic oil; in the case of a pneumatic cylinder, the fluid medium in the pneumatic cylinder may include but is not limited to air.

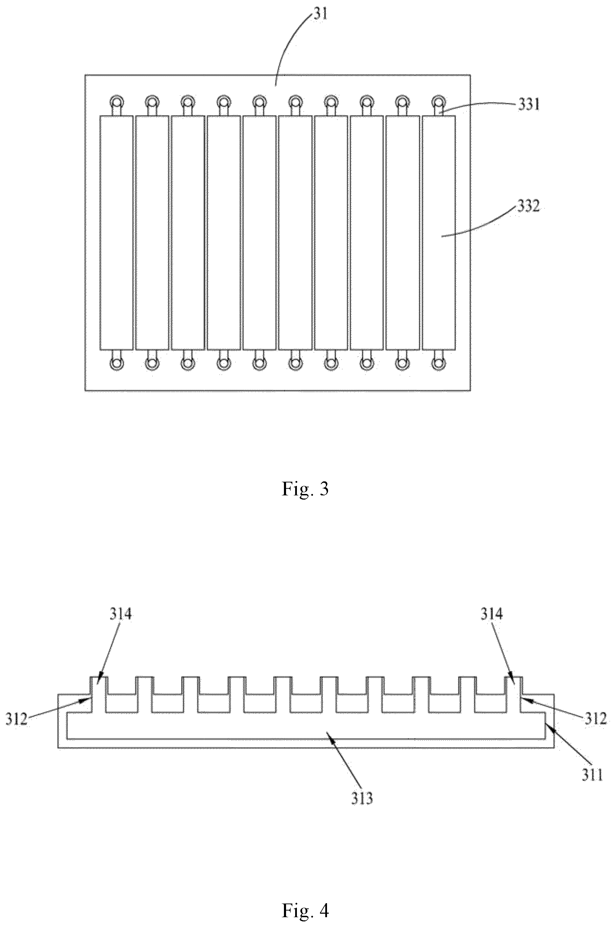

As shown in Figs. 2 and 4, in an embodiment of the present disclosure, the pressure cylinder 31 includes a cylinder body 311 with a communication space 313 formed therein and a piston lifting portion 312 with a lifting channel 314 formed therein. The cylinder body 311 is provided with piston lifting portions 312 at positions corresponding to the two ends of the roller assembly 33, and the communication space 313 of the cylinder body 311 is in communication with the lifting channels 314 of the piston lifting portions 312. Since at least two roller assemblies 33 are provided, the cylinder body 311 may be provided with piston lifting portions 312 in quantity equal to two times of the quantity of the roller assemblies 33, in order to correspond to the two ends of each roller assembly 33 in the at least two roller assemblies 33, and the lifting channel 314 of each piston lifting portion 312 is in communication with the communication space 313 of the cylinder body 311, so that the fluid medium in the communication space 313 can be injected into each lifting channel 314 respectively. Besides, each piston rod 32 includes a piston body 321 arranged in the lifting channel 314 and a rod body 322 connecting the piston body 321 and the roller shaft 331, the piston body 321 is arranged in close fit with the peripheral wall of the lifting channel 314, and the rod body 322 is connected to the end of the roller shaft 331 extending out of the roller body 332. That is to say, the piston body 321 can divide the lifting channel 314 into two parts, specifically, one part of the lifting channel 314 below the piston body 321 is in communication with the communication space 313 and can be filled with the fluid medium, while the other part of the lifting channel 314 above the piston body 321 is blocked from communicating with the communication space 313 owing to the sealing effect of the piston body 321, so that the fluid medium can't enter the part of the lifting channel 314 above the piston body 321. The arrangement of the lifting channels 314 can ensure the stability of the up-and-down movement of the piston rod 32, and the communication space 313 can communicate with the lifting channels 314, so that each piston body 321 can bear the same acting force.

Specifically, in the case of n roller assemblies 33 (n is greater than or equal to 2), the number of the piston lifting portions 312 of the pressure cylinder 31 is 2n, which is to say, the number of the lifting channels 314 is 2n, the 2n lifting channels 314 can be in communication with each other via the communication space 313 of the cylinder body 311, and the 2n piston lifting portions 312 are respectively arranged in one-to-one correspondence with the two ends of the n roller assemblies 33. The piston bodies 321 with 2n piston rods 32 are arranged in 2n lifting channels 314 in one-to-one correspondence, and are respectively connected to the ends of the corresponding roller shafts 331 extending out of the roller body 332 via the rod bodies 322.

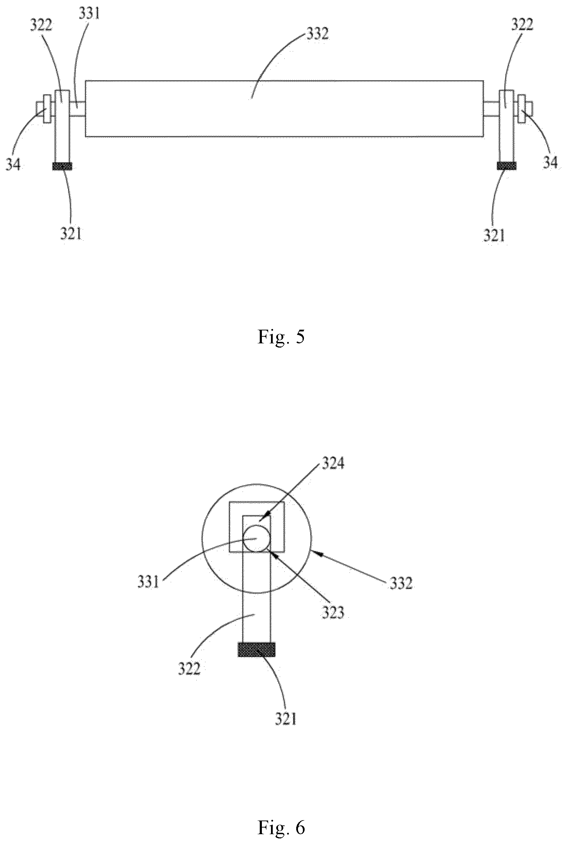

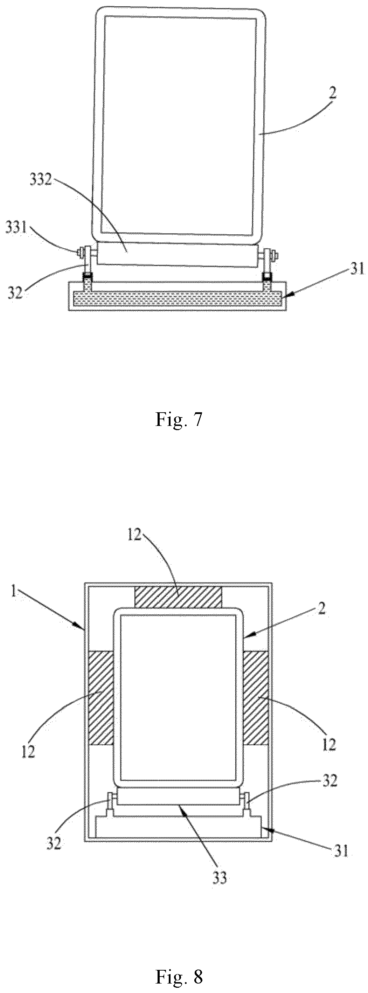

As shown in Figs. 2, 3 and 5, in an embodiment of the present disclosure, the piston rod 32 is provided with a movement hole 323, and the self-adjusting roller apparatus 3 further includes retaining nuts 34. The two ends of the roller shaft 331 extending out of the roller body 332 pass through the corresponding movement hole 323 and the retaining nuts 34 sequentially, and are connected with the retaining nuts 34 through threads. That is to say, the piston rod 32 may be provided with a movement hole 323 for the roller shaft 331 to pass there-through, an end of the roller shaft 331 passing through the movement hole 323 is provided with an external threaded section, and a retaining nut 34 is sleeved on the external threaded section to limit the axial movement of the roller shaft 331; moreover, the two ends of the roller shaft 331 of each roller assembly 33 are correspondingly provided with a piston rod 32 and a retaining nut 34, so that the two ends of the roller assembly 33 can be connected to two piston rods 32 respectively. Each piston rod 32 is detachably connected with the roller assembly 33 to facilitate maintenance and service. As shown in Fig. 6, in an embodiment of the present disclosure, the movement hole 323 is formed with a movement clearance 324 for the roller shaft 331 to move up and down. The piston rod 32 is connected to the roller shaft 331 through the movement hole 323, and the diameter of the movement hole 323 in the height direction is greater than the shaft diameter of the roller shaft 331, so that when the roller shaft 331 is inserted through the movement hole 323, a movement clearance 324 exists in the movement hole 323 for the roller shaft 331 to move up and down; thus, when the insulated inner arm 2 extends out and bears an offset load, the two ends of the roller shaft 331 can be adjusted adaptively in the corresponding movement hole 323, as shown in Fig. 7.

In an embodiment of the present disclosure, the roller shaft 331 may have a circular cross section, and the movement hole 323 may be a square hole. In order to form a movement clearance 324 in the movement hole 323 for the roller shaft 331 to move up and down, the distance between the upper inner wall and the lower inner wall of the movement hole 323 configured as a square hole may be greater than the diameter of the circular cross section of the roller shaft 331.

In an embodiment of the present disclosure, a bearing element may be provided between the roller shaft 331 and the roller body 332. Thus, the roller body 332 can roll with minimal friction. Specifically, two bearing elements are provided, and the two bearing elements are arranged at two ends on the inner side of the roller body 332, so that the roller body 332 can be supported from the two ends.

Please see Fig. 1 again. In an embodiment of the present disclosure, a lower side plate of the outer arm 1 bulges downward to form a mounting space 11 for accommodating the pressure cylinder 31, so as to minimize the size of the outer arm 1. Specifically, the outer arm 1 includes an upper side plate and a lower side plate that are oppositely arranged, and a left side plate and a right side plate that are oppositely arranged, and the mounting space 11 may be arranged near the free end of the outer arm 1.

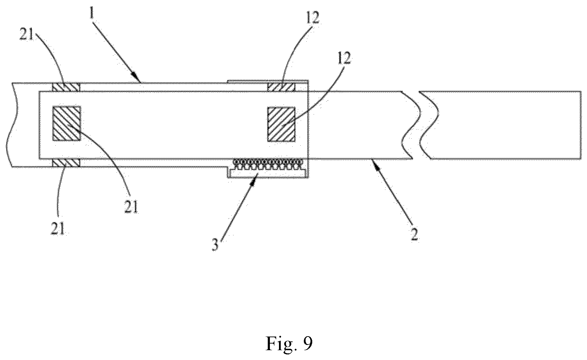

As shown in Figs. 8 and 9, in an embodiment of the present disclosure, the insulated telescopic arm further includes a first stop block 12, which is arranged on the inner wall of the outer arm 1 and used for abutting against the upper side and the left and right sides of the insulated inner arm 2. That is to say, the first stop block 12 arranged on the outer arm 1 cooperates with the self-adjusting roller apparatus 3 to limit the insulated inner arm 2 from the periphery of the insulated inner arm 2, so that the insulated inner arm 2 can be accurately centered during the telescopic operation. Specifically, three first stop blocks 12 may be provided, and the three first stop blocks 12 are respectively arranged on the inner walls of the upper side plate, the left side plate and the right side plate of the outer arm 1 corresponding to the self-adjusting roller apparatus 3. Of course, the present disclosure is not limited to that arrangement. Alternatively, the first stop block 12 may be designed into an integral structure, and may be arranged on the inner walls of the left side plate, the upper side plate and the right side plate of the outer arm 1 sequentially. Furthermore, the first stop block 12 may be mounted to the outer arm 1 by means of threaded fasteners, and the first stop block 12 may be made of nylon or rubber.

As shown in Fig. 9, in an embodiment of the present disclosure, the insulated telescopic arm further includes a second stop block 21, which is arranged on the outer peripheral wall of the inner end of the insulated inner arm 2 and used for abutting against the inner wall of the outer arm 1. That is to say, the second stop block 21 arranged on the insulated inner arm 2 can limit the insulated inner arm 2 from the periphery of the insulated inner arm 2 at the inner end of the insulated inner arm 2, so as to further ensure that the insulated inner arm 2 can be accurately centered during the telescopic operation. Specifically, four second stop blocks 21 may be provided, and the four second stop blocks 21 may be respectively arranged on the outer peripheral wall of the insulated inner arm 2 and respectively abut against the inner walls of the upper side plate, the lower side plate, the left side plate and the right side plate of the outer arm 1 in one-to-one correspondence. Of course, the present disclosure is not limited to that arrangement. Alternatively, the second stop block 21 may be designed into an integral structure, and may be arranged around the outer peripheral wall of the inner end of the insulated inner arm 2. It may be noted particularly that the inner end of the insulated inner arm 2 is referred in relation to the outer end of the insulated inner arm 2. The outer end of the insulated inner arm 2 refers to the end that can extend out of the free end of the outer arm 1, while the inner end of the insulated inner arm 2 refers to the end that can't extend out of the free end of the outer arm 1. Furthermore, the second stop block 21 may be mounted to the insulated inner arm 2 by means of threaded fasteners, and the second stop block 21 may be made of nylon or rubber. In addition, in a case that the outer arm 1 is an insulated outer arm, the second stop block 21 at the upper end of the outer arm may be replaced by the self-adjusting roller apparatus 3 to reduce the wear between the insulated outer arm and the inner end of the insulated inner arm 2.

Please see Figs. 1 and 2 again. In an embodiment of the present disclosure, a plurality of roller assemblies 33 are provided, each roller assembly 33 extends in the width direction of the outer arm 1, and the plurality of roller assemblies 33 are sequentially arranged at an interval in the length direction of the outer arm 1. The number of the roller assemblies 33 may be more than two or even up to ten, and may be determined according to the actual requirement. Since the two ends of each of the plurality of roller assemblies 33 are connected with a piston rod 32 that can move up and down in the pressure cylinder 31, the plurality of roller assemblies 33 bear the pressure evenly; in addition, as the number of the roller assemblies 33 is increased, the pressure evenly exerted on each roller assembly 33 by the insulated inner arm 2 can be decreased, so as to further attain the purpose of reducing wear.

In order to attain the above object, the present disclosure further provides an insulated bucket arm vehicle, which includes the insulated telescopic arm described above. Since the insulated bucket arm vehicle employs all the technical schemes in the above embodiments, it at least has all the beneficial effects brought by the technical schemes in the above embodiments, which will not be further detailed here.

In the description herein, it may be understood that the terms "first" and "second" are used only for a descriptive purpose, but shall not be interpreted as indicating or implying relative importance or implicitly indicating the quantity of the indicated technical features. Hence, a feature defined by "first" or "second" may explicitly or implicitly include at least one such feature. In the description of the present disclosure, "a plurality" means at least two, such as two or more, etc., unless otherwise specified explicitly.

In the present disclosure, unless otherwise specified and defined explicitly, the terms "install", "connect", "fix", etc. shall be interpreted in their general meanings. For example, a connection may be a fixed connection, a detachable connection, or an integral connection; may be a mechanical connection or an electrical connection or in communication with each other; may be a direct connection or an indirect connection via an intermediate medium, or internal communication or interactive relation between two elements. Those having ordinary skills in the art may interpret the specific meanings of the terms in the present disclosure in their context.

In the description of the present disclosure, the expressions of reference terms "an embodiment", "some embodiments", "an example", "a specific example", or "some examples" mean that the specific features, structures, materials or characteristics described in those embodiments or examples are included in at least one embodiment or example of the present disclosure. In this specification, the exemplary expressions of the above terms may not necessarily refer to the same embodiment or example. Moreover, the specific features, structures, materials, or characteristics described can be combined appropriately in any one or more embodiments or examples. Furthermore, those skilled in the art may combine or assemble different embodiments or examples and features in different embodiments or examples described herein, provided that there is no conflict among them.

While the present disclosure is illustrated and described above in embodiments, it may be understood that the embodiments are exemplary only and shall not be deemed as constituting any limitation on the present invention.

## Claims

1. An insulated telescopic arm, comprising:
an outer arm (1);
an insulated inner arm (2), which is confined in the outer arm (1) and can extend from a free end of the outer arm (1) in a length direction of the outer arm (1);
a self-adjusting roller apparatus (3), comprising a pressure cylinder (31) arranged on the outer arm (1), piston rods (32) that are in sliding fit with the pressure cylinder (31) and can move up and down with respect to the pressure cylinder (31), and at least two roller assemblies (33) for bearing the insulated inner arm (2), wherein each of the roller assemblies (33) comprises a roller shaft (331) and a roller body (332) that is used for bearing the insulated inner arm (2) and is rotatably sleeved outside the roller shaft (331), and two ends of the roller shaft (331) extending out of the roller body (332) are correspondingly connected to the piston rods (32), **characterized in that** the two ends of each of the plurality of roller assemblies (33) are connected with a piston rod (32) that moves up and down in the pressure cylinder (31) such that each roller assembly (33) is correspondingly connected to two piston rods (32) to support the two ends of the roller assembly (33) respectively.

2. The insulated telescopic arm of claim 1, wherein the pressure cylinder (31) comprises a cylinder body portion (311) with a communication space (313) formed therein and piston lifting portions (312) with lifting channels (314) formed therein, wherein the piston lifting portions (312) are arranged on the cylinder body portion (311) respectively at positions corresponding to the two ends of the roller assemblies (33), the communication space (313) is in communication with the lifting channels (312), and each piston rod (32) comprises a piston body (321) slidably fitted in the lifting channel (314) and a rod body (322) connecting the piston body (321) and the roller shaft (331).

3. The insulated telescopic arm of claim 1, wherein each piston rod (32) is provided with a movement hole (323), and the self-adjusting roller apparatus (3) further comprises retaining nuts (34); the two ends of the roller shaft (331) extending out of the roller body (332) pass through corresponding movement holes (323) and the retaining nuts (34) respectively, and are connected with the retaining nuts (34) through threads.

4. The insulated telescopic arm of claim 3, wherein the movement hole (323) has a movement clearance (324) formed therein for the roller shaft (331) to move up and down.

5. The insulated telescopic arm of claim 4, wherein the roller shaft (331) has a circular cross section, and the movement hole (323) is a square hole.

6. The insulated telescopic arm of any one of claims 1 to 5, wherein a lower side plate of the outer arm (1) bulges downward to form a mounting space (11) for accommodating the pressure cylinder (31).

7. The insulated telescopic arm of any one of claims 1 to 5, further comprising a first stop block (12), which is arranged on an inner wall of the outer arm (1) and used for abutting against an upper side and left and right sides of the insulated inner arm (2).

8. The insulated telescopic arm of any one of claims 1 to 5, further comprising a second stop block (21), which is arranged on an outer peripheral wall of an inner end of the insulated inner arm (2) and used for abutting against the inner wall of the outer arm (1).

9. The insulated telescopic arm of any one of claims 1 to 5, wherein a plurality of roller assemblies (33) is provided, each roller assembly (33) extends in a width direction of the outer arm (1), and the plurality of roller assemblies (33) are sequentially arranged at an interval in the length direction of the outer arm (1).

10. An insulated bucket arm vehicle, comprising the insulated telescopic arm of any one of claims 1 to 9.

## Patentansprüche

1. Isolierter teleskopischer Arm, umfassend:
einen äußeren Arm (1);
einen isolierten inneren Arm (2), der im äußeren Arm (1) begrenzt ist und sich von einem freien Ende des äußeren Armes (1) in einer Längsrichtung des äußeren Armes (1) erstrecken kann;
einen selbsteinstellenden Rollenapparat (3), umfassend einen Druckzylinder (31), der auf dem äußeren Arm (1) angeordnet ist, Kolbenstangen (32), die mit dem Druckzylinder (31) in Gleitpassung stehen und sich auf und ab im Hinblick auf den Druckzylinder (31) bewegen können, und zumindest zwei Rollenanordnungen (33) zum Tragen des isolierten inneren Armes (2), worin jede von den Rollenanordnungen (33) eine Rollenwelle (331) und einen Rollenkörper (332) umfasst, der benutzt wird, um den isolierten inneren Arm (2) zu tragen und außerhalb der Rollenwelle (331) drehbar aufgesteckt ist, und zwei Enden der Rollenwelle (331), die sich aus dem Rollenkörper (332) heraus erstrecken, mit den Kolbenstangen (32) entsprechend verbunden sind, **dadurch gekennzeichnet, dass** die zwei Enden von jeder von der Vielzahl von Rollenanordnungen (33) mit einer Kolbenstange (32), die sich auf und ab im Druckzylinder (31) bewegt, derart verbunden sind, dass jede Rollenanordnung (33) mit zwei Kolbenstangen (32) entsprechend verbunden ist, um die zwei Enden der Rollenanordnung (33) jeweils zu tragen.

2. Isolierter teleskopischer Arm nach Anspruch 1, worin der Druckzylinder (31) einen Zylinderkörperabschnitt (311) mit einem Kommunikationsraum (313), der darin ausgebildet ist, und Kolbenhubabschnitte (312) mit Hubkanälen (314), die darin ausgebildet sind, umfasst, worin die Kolbenhubabschnitte (312) auf dem Zylinderkörperabschnitt (311) jeweils an Stellungen angeordnet sind, die den zwei Enden der Rollenanordnungen (33) entsprechen, der Kommunikationsraum (313) mit den Hubkanälen (312) in Kommunikation steht, und jede Kolbenstange (32) einen Kolbenkörper (321), der im Hubkanal (314) gleitend passend ist, und einen Stangenkörper (322), der den Kolbenkörper (321) und die Rollenwelle (331) verbindet, umfasst.

3. Isolierter teleskopischer Arm nach Anspruch 1, worin jede Kolbenstange (32) mit einem Bewegungsloch (323) versehen ist, und der selbsteinstellende Rollenapparat (3) ferner Haltemuttern (34) umfasst; die zwei Enden der Rollenwelle (331), die sich aus dem Rollenkörper (332) heraus erstrecken, jeweils durch entsprechende Bewegungslöcher (323) und durch die Haltemuttern (34) laufen, und mit den Haltemuttern (34) durch Gewinde verbunden sind.

4. Isolierter teleskopischer Arm nach Anspruch 3, worin das Bewegungsloch (323) einen Bewegungsspielraum (324) hat, der darin ausgebildet ist, damit die Rollenwelle (331) sich auf und ab bewegt.

5. Isolierter teleskopischer Arm nach Anspruch 4, worin die Rollenwelle (331) einen kreisförmigen Querschnitt hat, und das Bewegungsloch (323) ein quadratförmiges Loch ist.

6. Isolierter teleskopischer Arm nach einem der Ansprüche 1 bis 5, worin eine untere Seitenplatte des äußeren Armes (1) sich nach unten wölbt, um einen Montageraum (11) zur Aufnahme des Druckzylinders (31) zu bilden.

7. Isolierter teleskopischer Arm nach einem der Ansprüche 1 bis 5, ferner umfassend einen ersten Sperrblock (12), der an einer inneren Wand des äußeren Armes (1) angeordnet ist und benutzt wird, um an eine obere Seite und linke und rechte Seiten des isolierten inneren Armes (2) anzuliegen.

8. Isolierter teleskopischer Arm nach einem der Ansprüche 1 bis 5, ferner umfassend einen zweiten Sperrblock (21), der an einer äußeren Umfangswand eines inneren Endes des isolierten inneren Armes (2) angeordnet ist und benutzt wird, um an die innere Wand des äußeren Armes (1) anzuliegen.

9. Isolierter teleskopischer Arm nach einem der Ansprüche 1 bis 5, worin eine Vielzahl von Rollenanordnungen (33) vorgesehen ist, jede Rollenanordnung (33) sich in einer Breitenrichtung des äußeren Armes (1) erstreckt, und die Vielzahl von Rollenanordnungen (33) in einem Abstand in der Längsrichtung des äußeren Armes (1) sequenziell angeordnet sind.

10. Fahrzeug mit isoliertem Schaufelarm, umfassend den isolierten teleskopischen Arm nach einem der Ansprüche 1 bis 9.

## Revendications

1. Bras télescopique isolé, comprenant :
un bras externe (1) ;
un bras interne isolé (2), qui est confiné dans le bras externe (1) et peut s'étendre à partir d'une extrémité libre du bras externe (1) dans une direction de longueur du bras externe (1) ;
un appareil à rouleaux à réglage automatique (3), comprenant un cylindre de pression (31) agencé sur le bras externe (1), des tiges de piston (32) qui sont en ajustement coulissant avec le cylindre de pression (31) et peuvent se mouvoir vers le haut et vers le bas par rapport au cylindre de pression (31), et au moins deux ensembles rouleaux (33) pour porter le bras interne isolé (2), dans lequel chacun des ensembles rouleaux (33) comprend un arbre de rouleau (331) et un corps de rouleau (332) qui est utilisé pour porter le bras interne isolé (2) et est emmanché de manière rotative à l'extérieur de l'arbre de rouleau (331), et deux extrémités de l'arbre de rouleau (331) s'étendant hors du corps de rouleau (332) sont reliées de manière correspondante aux tiges de piston (32), **caractérisé en ce que** les deux extrémités de chacun de la pluralité d'ensembles rouleaux (33) sont reliées à une tige de piston (32) qui se meut vers le haut et vers le bas dans le cylindre de pression (31) de sorte que chaque ensemble rouleau (33) est relié de manière correspondante à deux tiges de piston (32) pour supporter les deux extrémités de l'ensemble rouleau (33) respectivement.

2. Bras télescopique isolé selon la revendication 1, dans lequel le cylindre de pression (31) comprend une partie de corps de cylindre (311) avec un espace de communication (313) formé dans celle-ci et des parties de levage de piston (312) avec des canaux de levage (314) formés dans celles-ci, dans lequel les parties de levage de piston (312) sont agencées sur la partie de corps de cylindre (311) respectivement à des positions correspondant aux deux extrémités des ensembles rouleaux (33), l'espace de communication (313) est en communication avec les canaux de levage (312), et chaque tige de piston (32) comprend un corps de piston (321) ajusté de manière coulissante dans le canal de levage (314) et un corps de tige (322) reliant le corps de piston (321) et l'arbre rouleau (331).

3. Bras télescopique isolé selon la revendication 1, dans lequel chaque tige de piston (32) est pourvue d'un trou de mouvement (323), et l'appareil à rouleau à réglage automatique (3) comprend en outre des écrous de retenue (34) ; les deux extrémités de l'arbre de rouleau (331) s'étendant hors du corps de rouleau (332) passent à travers des trous de mouvement (323) correspondants et les écrous de retenue (34) respectivement, et sont reliées aux écrous de retenue (34) par des filetages.

4. Bras télescopique isolé selon la revendication 3, dans lequel le trou de mouvement (323) présente un jeu de mouvement (324) formé à l'intérieur pour que l'arbre de rouleau (331) se meuve vers le haut et vers le bas.

5. Bras télescopique isolé selon la revendication 4, dans lequel l'arbre de rouleau (331) présente une section transversale circulaire, et le trou de mouvement (323) est un trou carré.

6. Bras télescopique isolé selon l'une quelconque des revendications 1 à 5, dans lequel une plaque latérale inférieure du bras externe (1) est bombée vers le bas pour former un espace de montage (11) pour loger le cylindre de pression (31).

7. Bras télescopique isolé selon l'une quelconque des revendications 1 à 5, comprenant en outre un premier bloc d'arrêt (12), qui est agencé sur une paroi interne du bras externe (1) et utilisé pour venir en butée contre un côté supérieur et des côtés gauche et droit du bras interne isolé (2).

8. Bras télescopique isolé selon l'une quelconque des revendications 1 à 5, comprenant en outre un second bloc d'arrêt (21), qui est agencé sur une paroi périphérique externe d'une extrémité interne du bras interne isolé (2) et utilisé pour venir en butée contre la paroi interne du bras externe (1).

9. Bras télescopique isolé selon l'une quelconque des revendications 1 à 5, dans lequel une pluralité d'ensembles rouleaux (33) est fournie, chaque ensemble rouleau (33) s'étend dans une direction de largeur du bras externe (1), et la pluralité d'ensembles rouleaux (33) sont agencés séquentiellement à un intervalle dans la direction de la longueur du bras externe (1).

10. Véhicule à bras de nacelle isolé, comprenant le bras télescopique isolé selon l'une quelconque des revendications 1 à 9.
